# FASCICULE DE BREVET EUROPEEN

(11) **EP 2 935 355 B1**
(45) Date de publication et mention de la délivrance du brevet: **05.02.2020**
(21) Numéro de dépôt: 13814908.3
(22) Date de dépôt: 19.12.2013
(51) Int. Cl.: C08F 114/06, C08F 120/32, C08J 5/18, C08L 27/06, C08L 33/06, C08F 2/26

(54) **PROCEDE POUR LA PREPARATION D'UN POLYMERE DU CHLORURE DE VINYLE**
VERFAHREN ZUR HERSTELLUNG EINES VINYLCHLORIDPOLYMERS
METHOD FOR PREPARING A VINYL CHLORIDE POLYMER

(30) Priorité: 20.12.2012 FR 1262454
(43) Date de publication de la demande: 28.10.2015
(73) Titulaire: Inovyn Europe Limited, Runcorn, Cheshire WA7 4JE (GB)
(72) Inventeur: BIRAL, François, B-1348 Ottignies-Louvain-la-Neuve (BE); BOSCHET, Frédéric, B-1120 Brussels (BE); BODART, Vincent, B-5001 Namur (BE)
(74) Mandataire: King, Alex
(86) Numéro de dépôt international: PCT/EP2013/077445
(87) Numéro de publication internationale: WO 2014/096224

(56) Documents cités:
- EP-A2- 0 450 452
- WO-A1-97/08212
- WO-A1-2012/065901
- US-A- 5 319 028

## Description

La présente demande revendique la priorité de la demande française FR1262454 déposée le 20 décembre 2012.

La présente invention concerne un procédé pour la préparation d'un polymère du chlorure de vinyle (PVC). Elle concerne plus particulièrement un procédé pour la préparation d'un tel polymère incluant une étape de polymérisation effectuée en dispersion aqueuse, le plus souvent en émulsion aqueuse. Elle concerne aussi les polymères du chlorure de vinyle obtenus, leur utilisation et les articles ou parties d'articles fabriqués au départ de celux-ci.

Le PVC est l'un des plus importants matériaux thermoplastiques commercialisés à l'heure actuelle. Compte tenu de ses très bonnes propriétés mécaniques et physiques, il est utilisé dans un grand nombre d'applications dont la majorité d'entre elles nécessitent une mise en œuvre à des températures élevées auxquelles le PVC vierge résiste difficilement. Améliorer la stabilité thermique du PVC a donc été une préoccupation depuis toujours et des solutions ont bien évidemment été recherchées.

Parmi celles-ci, l'additivation du PVC par des composés inorganiques ou organiques assurant le rôle de stabilisants thermiques est étudiée depuis de longues années avec la recherche continue de nouveaux stabilisants thermiques afin de remplacer les premiers stabilisants thermiques identifiés présentant le désavantage de contenir des métaux lourds non appréciés d'un point de vue environnemental. Cette alternative présente toutefois le désavantage de nécessiter une étape de mélange du PVC après sa synthèse par polymérisation.

Afin d'éviter ces 2 étapes distinctes, une autre voie qui a été explorée est l'ajout d'un composé époxydé, de préférence liquide à la température ordinaire comme les esters d'acide gras époxydés tels l'huile de soja époxydée et l'huile de lin époxydée, à un latex de PVC avant que celui-ci ne soit séché par atomisation et qu'une résine de PVC stabilisée thermiquement ne soit obtenue. C'est ce que décrit la demande de brevet JP-A-09151201. Néanmoins, il s'avère que pour que l'efficacité de ces esters d'acide gras époxydés sur la stabilité thermique du PVC soit suffisante, il est requis d'en ajouter une quantité élevée ; ce qui a pour désavantage d'influencer négativement les autres propriétés du PVC. De plus, il a été constaté qu'au cours du temps, ce type d'additif migre/exsude vers la surface de l'article fabriqué avec le PVC additivé ; ce qui n'est évidemment pas acceptable.

Pour éviter ces inconvénients et considérant que les composés avec des fonctions époxydes ont un effet positif sur la stabilité thermique du PVC, on a dès lors envisagé de mélanger le PVC avec un polymère du méthacrylate de glycidyle (PGMA). Ainsi, M. W. Sabaa, Z. R. Farag et N. A. Mohamed, Journal of Applied Polymer Science, vol. 110, 2205-2210 (2008) ont étudié la dégradation thermique du PVC en présence de PGMA et d'éventuellement un stabilisant thermique (carbonate de plomb dibasique (DBLC)) pour conclure que le PGMA est un bon stabilisant thermique pour le PVC quand il est utilisé seul ou en mélange avec le DBLC.

Pour éviter les 2 étapes distinctes de la polymérisation et de l'additivation, une autre alternative qui a été envisagée est la copolymérisation du VC avec le méthacrylate de glycidyle (GMA) conduisant à des copolymères VC-GMA.

La Demanderesse a néanmoins constaté que ces deux dernières alternatives, bien que conduisant à une amélioration de la stabilité thermique du PVC, présentent l'inconvénient de conduire à une résine de PVC contenant une quantité non négligeable d'épichlorohydrine qui présente le grand désavantage d'être toxique (classification T selon l'annexe I de la Directive 67/548/EEC) et carcinogène (classification R45 selon le même document).

La présente invention vise donc à fournir un procédé pour la préparation de PVC qui ne présente pas cet inconvénient tout en se caractérisant par une très bonne stabilité thermique.

La présente invention concerne donc à titre principal un procédé pour la préparation d'un polymère du chlorure de vinyle, comprenant
- une étape de polymérisation du chlorure de vinyle, et éventuellement d'un ou plusieurs comonomères de celui-ci, effectuée en dispersion aqueuse en présence d'au moins un initiateur de polymérisation, d'au moins un agent émulsionnant et d'un latex semence d'un polymère contenant des fonctions époxydes, conduisant à l'obtention d'un latex d'un polymère du chlorure de vinyle, lors de laquelle le poids du latex semence rapporté au poids total du chlorure de vinyle et de son ou ses éventuels comonomères vaut au plus 10%;
- une étape de séparation du polymère du chlorure de vinyle du latex le contenant conduisant à l'obtention d'un polymère du chlorure de vinyle.

Dans la présente description, les termes «monomère», «polymère», «initiateur», «agent émulsionnant», et «article» sont utilisés indistinctement au singulier comme au pluriel.

Le polymère préparé par le procédé selon l'invention est un polymère du chlorure de vinyle. Dans la présente description, on entend désigner par les termes «polymère du chlorure de vinyle», tous les polymères contenant avantageusement au moins 60 % en poids, de préférence au moins 70 % en poids, de manière particulièrement préférée au moins 75 % en poids et de manière tout particulièrement préférée au moins 85 % en poids d'unités monomériques dérivées du chlorure de vinyle (monomère), donc aussi bien les homopolymères du chlorure de vinyle (contenant 100 % en poids d'unités monomériques dérivées du chlorure de vinyle) que les copolymères du chlorure de vinyle avec un ou plusieurs monomères éthyléniquement insaturés (appelés comonomères) choisis parmi les esters vinyliques comme l'acétate de vinyle et les monomères (méth)acryliques comme l'acrylate de n-butyle et le méthacrylate de méthyle. Parmi tous les polymères du chlorure de vinyle mentionnés ci-dessus, la préférence est accordée aux homopolymères du chlorure de vinyle et aux copolymères du chlorure de vinyle avec l'acétate de vinyle. Le polymère préparé par le procédé selon l'invention est de manière tout particulièrement préférée un homopolymère du chlorure de vinyle.

L'étape de polymérisation comprise dans le procédé de préparation du polymère de VC selon l'invention est effectuée en dispersion aqueuse en présence d'au moins un initiateur de polymérisation et d'au moins un agent émulsionnant. Par ces termes, on entend désigner, dans la présente description, les polymérisations réalisées selon un mécanisme radicalaire en émulsion aqueuse ou en microsuspension aqueuse.

Par polymérisation en émulsion aqueuse, on entend désigner, tout procédé de polymérisation s'effectuant en milieu aqueux en présence d'au moins un agent émulsionnant à titre de surfactant et d'au moins un initiateur de polymérisation, de préférence hydrosoluble.

Par polymérisation en microsuspension aqueuse, encore appelée en dispersion aqueuse homogénéisée ou en miniémulsion, on entend désigner tout procédé de polymérisation dans lequel on met en oeuvre au moins un initiateur de polymérisation, de préférence oléosoluble, et on réalise une émulsion de gouttelettes de monomères grâce à une agitation mécanique puissante et qui se caractérise par la présence d'au moins un agent émulsionnant à titre de surfactant. L'agitation mécanique peut être prodiguée par un moyen mécanique approprié tel que, par exemple, un moulin colloïdal, une pompe rapide, un agitateur à vibrations, un générateur à ultra-sons, un homogénéiseur à haute pression, etc.

L'étape de polymérisation peut néanmoins également être effectuée en suspension aqueuse.

Par polymérisation en suspension aqueuse, on entend désigner, tout procédé de polymérisation s'effectuant en milieu aqueux en présence d'au moins un agent dispersant (appelé aussi agent de suspension ou colloïde protecteur) et d'au moins un initiateur de polymérisation, de préférence oléosoluble.

L'étape de polymérisation est de préférence effectuée en émulsion aqueuse.

L'étape de polymérisation comprise dans le procédé selon l'invention est effectuée en présence d'au moins un initiateur de polymérisation.

Par l'expression « au moins un », on entend désigner que l'étape de polymérisation est effectuée en présence d'un ou de plusieurs initiateurs de polymérisation.

Si la polymérisation est effectuée en émulsion aqueuse, l'étape de polymérisation est effectuée avantageusement en présence d'au moins un initiateur de polymérisation hydrosoluble.

Les initiateurs hydrosolubles sont avantageusement des peroxydes hydrosolubles ou des diazocomposés hydrosolubles.

A titre d'exemples de peroxydes hydrosolubles, on peut citer le persulfates de métaux alcalins ou d'ammonium, le peroxyde d'hydrogène, les perborates et l'hydroperoxyde de t-butyle.

A titre d'exemples de diazocomposés hydrosolubles, on peut citer l'acide 4,4'-azobis (4-cyanovalérique).

Les initiateurs hydrosolubles sont choisis de préférence parmi les peroxydes hydrosolubles, de manière particulièrement préférée parmi les persulfates de métaux alcalins ou d'ammonium et le peroxyde d'hydrogène. Le persulfate d'ammonium est tout particulièrement préféré.

La quantité d'initiateur de polymérisation hydrosoluble mise en oeuvre varie avantageusement entre 0,2 et 3,5 ‰ en poids, de préférence entre 0,25 et 2 ‰ en poids et de manière particulièrement préférée entre 0.3 et 1 ‰ en poids, par rapport au poids de monomère(s) mis en œuvre.

Si la polymérisation est effectuée en microsuspension aqueuse, l'étape de polymérisation est effectuée avantageusement en présence d'au moins un initiateur de polymérisation oléosoluble.

Les initiateurs oléosolubles sont avantageusement des peroxydes organiques oléosolubles ou des diazocomposés oléosolubles.

A titre d'exemples de peroxydes organiques oléosolubles, on peut citer les peroxydes tels que le peroxyde de dilauryle, de di-*tert*-butyle ou de dibenzoyle; les peresters tels que le *tert*-butylperpivalate, le peroxy-2-éthylhexanoate de *tert-*butyle et le pernéodécanoate de *tert-butyle* et les peroxydicarbonates tels que le peroxydicarbonate de diéthyle, de diisopropyle, de di-n-propyle, de di-2-éthylhexyle et de dimyristyle. A titre d'exemples de diazocomposés, on peut citer l'azobisisobutyronitrile et le ,2'-azobis(méthoxy-2,4-diméthylvaléronitrile).

Les initiateurs oléosolubles sont choisis de préférence parmi les peroxydes organiques oléosolubles et de manière particulièrement préférée parmi les peroxydes avec une préférence pour le peroxyde de dilauryle, et les peroxydicarbonates avec une préférence pour le peroxydicarbonate de dimyristyle.

La quantité d'initiateur de polymérisation oléosoluble mise en oeuvre varie avantageusement entre 0,2 et 3,5 ‰ en poids, de préférence entre 0,8 et 2 ‰ en poids par rapport au poids de monomère(s) mis en œuvre.

L'étape de polymérisation comprise dans le procédé selon l'invention est effectuée en présence d'au moins un agent émulsionnant.

Par l'expression « au moins un », on entend désigner que l'étape de polymérisation est effectuée en présence d'un ou de plusieurs agents émulsionnants.

Les agents émulsionnants sont avantageusement des agents émulsionnants ioniques choisis parmi les agents émulsionnants anioniques, les agents émulsionnants cationiques et les agents émulsionnants amphotères. De préférence, ces agents émulsionnants sont choisis parmi les agents émulsionnants anioniques. De manière particulièrement préférée, ces agents émulsionnants sont choisis parmi les agents émulsionnants anioniques suivants: sulfates d'alkyle, sulfonates d'alkyle, sulfonates d'alkylaryle, sulfosuccinates de dialkyle et carboxylates d'alkyle. Ces sels peuvent être éventuellement éthoxylés et peuvent comprendre, comme contre-ion, un cation sodium, potassium, lithium, césium ou ammonium. De manière tout particulièrement préférée, ces agents émulsionnants sont choisis parmi les sels non éthoxylés sodiques suivants: sulfates d'alkyle tels que le dodécylsulfate de sodium ou le laurylsulfate de sodium par exemple, sulfonates d'alkyle tels que les sulfonates d'alkyles primaires ou secondaires sodiques par exemple, sulfonates d'alkylaryle tels que le dodécylbenzènesulfonate de sodium par exemple, sulfosuccinates de dialkyle, tels que le dioctylsulfosuccinate de sodium par exemple et carboxylates d'alkyle tels que les myristates de sodium et d'ammonium par exemple.

La quantité d'agent émulsionnant mise en œuvre varie avantageusement entre 0,1 et 3 % en poids par rapport au poids de monomère(s) mis en œuvre.

L'étape de polymérisation comprise dans le procédé selon l'invention est effectuée en présence d'un latex semence d'un polymère contenant des fonctions époxydes.

Le latex semence est avantageusement préparé par polymérisation en dispersion aqueuse d'un monomère portant des fonctions époxydes et éventuellement d'un comonomère de celui-ci en présence d'au moins un initiateur de polymérisation et d'au moins un agent émulsionnant.

Le latex semence est de préférence préparé par polymérisation en émulsion aqueuse. Dans ce cas le latex semence est donc avantageusement préparé en présence d'au moins un agent émulsionnant à titre de surfactant et d'au moins un initiateur de polymérisation hydrosoluble.

Toutes les définitions et limitations énoncées et décrites plus haut en rapport avec l'agent émulsionnant et l'initiateur de polymérisation hydrosoluble utilisés pour l'étape de polymérisation sont applicables, mutatis mutandis, à la préparation du latex semence.

Le dodécylbenzènesulfonate de sodium est particulièrement préféré à titre d'agent émulsionnant et le persulfate d'ammonium à titre d'initiateur de polymérisation hydrosoluble.

La préparation du latex semence ne nécessite pas avantageusement d'ajustement (réglage) du pH du milieu de polymérisation.

La température de polymérisation est avantageusement comprise entre 30 et 100°C, de préférence entre 30 et 90°C et plus particulièrement entre 45 et 85°C.

Le terme "latex semence" signifie, au sens de la présente invention, un latex dont les caractéristiques sont telles qu'il peut être utilisé comme base pour la fabrication d'un autre latex.

Le latex semence est de préférence une dispersion de particules d'un polymère contenant des fonctions époxydes d'un diamètre avantageusement compris entre 10 et 1000 nm, de préférence compris entre 30 et 200 nm.

La teneur en polymère contenant des fonctions époxydes du latex semence est avantageusement supérieure à 15 % en poids et de préférence supérieure à 20 % en poids. Elle est avantageusement inférieure à 50 % en poids, de préférence inférieure à 40 % en poids et tout particulièrement inférieure à 30 % en poids.

Le terme « fonction époxyde » désigne, aux fins de la présente invention, l'éther cyclique contenant trois atomes à savoir deux atomes de carbone et un atome d'oxygène.

Le polymère contenant des fonctions époxydes est avantageusement un homopolymère ou un copolymère. Par copolymères, on entend les polymères qui comprennent le monomère contenant au moins une fonction époxyde, de préférence à titre de monomère principal c'est-à-dire présent à raison d'au moins 50% en poids du mélange de monomères, et au moins un autre monomère copolymérisable désigné comme comonomère. Ce comonomère peut contenir au moins une fonction époxyde ou non.

Le terme « monomère contenant au moins une fonction époxyde » désigne, aux fins de la présente invention, un monomère éthylèniquement insaturé comprenant au moins une fonction époxyde. Le monomère contenant au moins une fonction époxyde est avantageusement choisi parmi
- les acrylates d'alkyle époxydé (avec une préférence pour l'acrylate de glycidyle aussi désigné comme l'acrylate de 2,3-époxy-propyle, l'acrylate de 2,3-époxy-butyle et l'acrylate de 3,4-époxy-butyle),
- les méthacrylates d'alkyle époxydé (avec une préférence pour le méthacrylate de glycidyle aussi désigné comme le méthacrylate de 2,3-époxy-propyle ou GMA, le méthacrylate de 2,3-époxy-butyle et le méthacrylate de 3,4-époxy-butyle),
- les 1,2-époxy-butènes (avec une préférence pour le 1,2-époxy-butène-3),
- les 1,2-époxy-alkylbutènes (avec une préférence pour le 1,2-époxy-méthylbutène-3),
- les 1,2-époxy-pentènes,
- les alkylpentènes époxydés,
- les 1,2-époxy-hexènes,
- les alkylhexènes époxydés,
- les alkylstyrènes époxydés (avec une préférence pour le glycidylstyrène, l'a-méthylglycidyl styrène, le glycidyl m-méthylstyrène, le glycidyl p-méthylstyrène, le glycidyl p-chlorostyrène et le glycidyl p-styrylcarboxylate), et
- les monomères allyliques glycidyliques (avec une préférence pour l'allylglycidylether aussi désigné comme l'allyl 2,3-époxypropyl éther, le 2-méthylallyl glycidyl éther et les allylphénolglycidyléthers comme l'o-allylphénolglycidyl éther, le m-allylphénolglycidyl éther et le p-allylphénolglycidyl éther).

De manière préférée, le monomère contenant au moins une fonction époxyde est choisi parmi les acrylates d'alkyle époxydé, les méthacrylates d'alkyle époxydé, les alkylstyrènes époxydés et les monomères allyliques glycidyliques, avec les préférences définies ci-dessus pour chacun d'entre eux.

De manière particulièrement préférée, le monomère contenant au moins une fonction époxyde est choisi parmi les acrylates d'alkyle époxydé, les méthacrylates d'alkyle époxydé et les monomères allyliques glycidyliques, avec les préférences définies ci-dessus pour chacun d'entre eux.

De manière tout particulièrement préférée, le monomère contenant au moins une fonction époxyde est choisi parmi l'acrylate de glycidyle, le méthacrylate de glycidyle (GMA) et l'allylglycidylether.

L'acrylate de glycidyle et le méthacrylate de glycidyle (GMA) sont vraiment tout particulièrement préférés.

Lorsque le polymère contenant des fonctions époxydes est un copolymère, le comonomère est avantageusement choisi parmi les monomères éthylèniquement insaturés avec une préférence pour les monomères (méth) acryliques répondant à la formule (I):

CH₂=CR₁R₂ (I)

dans laquelle R₁ est choisi parmi l'hydrogène et le groupe méthyle et R₂ est choisi parmi le groupe -CN et le groupe -CO-R₃ dans lequel R₃ est choisi parmi le groupe -OH, le groupe -O-R₄ avec R₄ choisi parmi les groupes alkyles linéaires ou branchés contenant de 2 à 18 atomes de carbone portant éventuellement un ou plusieurs groupes -OH, les groupes époxyalkyles contenant de 2 à 10 atomes de carbone et les groupes alkoxyalkyles contenant un total de 2 à 10 atomes de carbone et finalement R₃ est choisi parmi le groupe -NR₅R₆ dans lequel R₅ et R₆, qui sont identiques ou différents, sont choisis parmi l'hydrogène et les groupes alkyles contenant de 1 à 10 atomes de carbone, portant éventuellement un ou plusieurs groupes -OH.

De manière particulièrement préférée, le comonomère est choisi parmi les monomères (méth)acryliques répondant à la formule (I) ci-dessus dans laquelle R₁ est choisi parmi l'hydrogène et le groupe méthyle et R₂ est le groupe -CO-R₃ dans lequel R₃ est choisi parmi le groupe -OH et le groupe -O-R₄ avec R₄ choisi parmi les groupes alkyles linéaires ou branchés contenant de 2 à 18 atomes de carbone portant éventuellement un ou plusieurs groupes -OH, les groupes époxyalkyles contenant de 2 à 10 atomes de carbone et les groupes alkoxyalkyles contenant un total de 2 à 10 atomes de carbone.

Des exemples non limitatis de comonomère répondant à la formule (I) sont l'acrylate et le méthacrylate de méthyle, l'acrylate et le méthacrylate d'éthyle, l'acrylate et le méthacrylate de n-butyle, l'acrylate et le méthacrylate de 2-éthylhexyle, l'acrylate et le méthacrylate de 2-hydroxyéthyle, l'acrylate et le méthacrylate de glycidyle, l'acrylonitrile, le méthacrylonitrile, l'acide acrylique, l'acide méthacrylique, l'acrylamide et la N-méthylolacrylamide.

Les comonomères préférés sont l'acrylate et le méthacrylate de méthyle, l'acrylate et le méthacrylate d'éthyle, l'acrylate et le méthacrylate de n-butyle, l'acrylate et le méthacrylate de 2-éthylhexyle, l'acrylate et le méthacrylate de 2-hydroxyéthyle et l'acrylate et le méthacrylate de glycidyle.

Dans le contexte de la présente invention, le polymère contenant des fonctions époxydes est de préférence un homopolymère ou un copolymère de l'acrylate de glycidyle et du méthacrylate de glycidyle (GMA).

Quand il est un copolymère, le comonomère est de préférence choisi parmi les monomères (méth) acryliques répondant à la formule (I) ci-dessus, avec les préférences définies ci-dessus et avec une préférence toute particulière choisi parmi l'acrylate de n-butyle et le méthacrylate de n-butyle.

Dans le contexte de la présente invention, le polymère contenant des fonctions époxydes est de manière particulièrement préférée un homopolymère ou un copolymère du méthacrylate de glycidyle. Dès lors, le latex semence est de manière particulièrement préférée un latex d'un polymère du méthacrylate de glycidyle.

Il est enfin de manière tout particulièrement préférée un homopolymère du méthacrylate de glycidyle. Dès lors, le latex semence est de manière tout particulièrement préférée un latex d'un homopolymère du méthacrylate de glycidyle.

Le latex semence est donc de manière tout particulièrement préférée préparé par polymérisation en dispersion aqueuse d'un monomère portant des fonctions époxydes, de préférence du méthacrylate de glycidyle, en présence d'au moins un initiateur de polymérisation et d'au moins un agent émulsionnant.

Lors de l'étape de polymérisation comprise dans le procédé selon l'invention, le poids du latex semence rapporté au poids total du VC et de son ou ses éventuels comonomères vaut avantageusement au moins 0.1%, de préférence au moins 0.5%, de manière particulièrement préférée au moins 1% et de manière tout particulièrement préférée au moins 2%. Le poids du latex semence rapporté au poids total du VC et de son ou ses éventuels comonomères vaut au plus 10%, de manière préférée au plus 8% et de manière particulièrement préférée au plus 6%.

L'étape de polymérisation comprise dans le procédé selon l'invention est de manière tout particulièrement préférée effectuée en présence de 2 à 6 % en poids, par rapport au poids total du VC et de son ou ses éventuels comonomères, d'un latex semence d'un polymère contenant des fonctions époxydes.

Lorsque l'on exprime dans le texte de la présente demande de brevet, le % en poids du latex semence par rapport au poids total du VC et de son ou ses éventuels comonomères, il faut entendre, qu'aux fins de la présente invention, on entend désigner à chaque fois, le poids des particules solides du latex semence, en d'autres termes le poids du polymère contenant des fonctions époxydes.

Lors de l'étape de polymérisation, le milieu de polymérisation est avantageusement chauffé sous pression autogène à une température déterminée par la masse moléculaire que l'on désire obtenir pour le PVC.

La température de polymérisation est avantageusement comprise entre 30 et 100°C, de préférence entre 30 et 90°C, plus particulièrement entre 45 et 85°C. La polymérisation est avantageusement effectuée sous une pression comprise entre 0,3 et 2,5 MPa, de préférence entre 0,5 et 1,5 MPa.

L'étape de polymérisation est avantageusement poursuivie jusqu'à ce que 60 à 98 % en poids, de préférence 80 à 95 % en poids du (des) monomère(s) soi(en)t converti(s) avec diminution concomitante de la pression autogène du VC au sein du réacteur.

En conséquence de la conversion incomplète du monomère, la quantité de ce dernier qui subsiste dans la dispersion aqueuse obtenue à la fin de l'étape de polymérisation doit être éliminée.

Cette élimination peut être opérée de manière conventionnelle par un dégazage de la dispersion.

L'étape de polymérisation comprise dans le procédé selon l'invention conduit à l'obtention d'un latex de PVC.

Dans la présente description, on entend définir par le terme «latex de PVC», un système fluide et colloïdal dans lequel la phase dispersée comprend le PVC et dans lequel la phase continue est l'eau.

Les latex (aussi appelés dispersions aqueuses) de PVC ainsi produits contiennent des particules polymériques élémentaires présentant des diamètres moyens très faibles pouvant aller d'environ 10 à environ 5000 nm, de préférence d'environ 50 à environ 1500 nm.

La teneur en PVC du latex est avantageusement supérieure à 20 % en poids, de préférence supérieure à 30 % en poids, tout particulièrement supérieure à 35 % en poids. Elle est avantageusement inférieure à 60 % en poids et de préférence inférieure à 50 % en poids.

Le procédé selon l'invention comprend une étape de séparation du polymère du chlorure de vinyle du latex le contenant conduisant à l'obtention d'un polymère du chlorure de vinyle.

Après l'étape de polymérisation, le latex de PVC est donc traité de manière à en récupérer le PVC, de préférence sous la forme d'une résine.

Par « résine », on entend désigner aux fins de la présente invention, le polymère à l'état sec, de préférence sous forme de poudre.

L'étape de séparation peut être réalisée par tout procédé de séparation connu ou par leur combinaison ; elle est de préférence réalisée par l'un des procédés suivants ou par une combinaison de ceux-ci :
- filtration ou ultrafiltration
- coagulation
- décantation
- essorage
- écaillage
- lyophilisation
- séchage par atomisation

L'étape de séparation est de manière particulièrement préférée réalisée par filtration suivie d'un séchage par atomisation.

Le séchage par atomisation peut être réalisé au moyen de tout type de sécheur atomiseur connu ; il est de préférence réalisé:
- soit au moyen de sécheurs atomiseurs équipés d'un dispositif tournant à grande vitesse et percé de fins orifices desquels giclent les latex dans un courant d'air chaud;
- soit au moyen de sécheurs atomiseurs équipés d'une ou plusieurs buses de pulvérisation à un ou plusieurs fluides; le fluide est le latex, les autres fluides éventuels (désignés habituellement «fluides de pulvérisation») sont de l'air, de la vapeur ou des mélanges d'air et de vapeur; les fluides sont pulvérisés habituellement dans un courant d'air chaud.

Après l'étape de séparation, le PVC, de préférence sous forme de résine, peut être utilisé tel quel ou être traité de manière à en régler la granulométrie.

S'il est traité de manière à en régler la granulométrie, ce traitement peut être réalisé par tout procédé connu ou par leur combinaison. Le traitement de réglage de la granulométrie est de préférence réalisé par l'un des procédés suivants ou par une combinaison de ceux-ci :
- broyage
- classification
- tamisage.

Le traitement de réglage de la granulométrie est de manière particulièrement préférée réalisé par broyage.

La présente invention a également pour objet un PVC comprenant un polymère contenant des fonctions époxydes et se caractérisant par une teneur en épichlorohydrine inférieure ou égale à 10 ppm, de préférence inférieure ou égale à 8 ppm, de manière particulièrement préférée inférieure ou égale à 5 ppm et de manière tout particulièrement préférée inférieure ou égale à 3 ppm. Un tel PVC est avantageusement obtenu par le procédé selon l'invention.

Par l'expression «teneur en épichlorohydrine caractérisant le PVC», on entend désigner, aux fins de la présente invention, la teneur en épichlorohydrine mesurée sur un chromatographe en phase gazeuse couplé à un spectromètre de masse (technique d'espace de tête ou désorption thermique) lorsque le PVC est soumis à une sollicitation thermique à 180°C pendant 15 minutes.

Toutes les définitions et limitations énoncées et décrites plus haut en rapport avec le procédé selon l'invention sont applicables, mutatis mutandis, au PVC lui-même.

Ainsi, le PVC comprend de préférence un polymère du méthacrylate de glycidyle.

La présente invention a également pour objet l'utilisation du PVC selon l'invention ou obtenu par le procédé selon l'invention pour la préparation de films et de revêtements.

Toutes les définitions et limitations énoncées et décrites plus haut en rapport avec le procédé selon l'invention sont applicables, mutatis mutandis, à l'utilisation du PVC lui-même.

Enfin, la présente invention a pour objet un article ou partie d'article fabriqué au départ du PVC selon l'invention ou obtenu par le procédé selon l'invention.

Toutes les définitions et limitations énoncées et décrites plus haut en rapport avec le procédé selon l'invention sont applicables, mutatis mutandis, aux articles fabriqués.

Dans le cas où le contenu des brevets, demandes de brevet et publications incorporés par référence dans le présent texte entrerait en conflit avec la description de la présente demandede brevet de telle sorte que cela rendrait un terme peu clair, le texte de la présente demande de brevet prévaudra.

Les exemples qui suivent sont destinés à illustrer l'invention sans pour autant en limiter la portée.

### Exemple 1R (comparatif)

### Préparation d'un latex semence PVC

Dans un réacteur de 300 L équipé d'un agitateur et d'une double enveloppe, on a préparé un latex semence PVC par une étape de polymérisation en émulsion aqueuse (émulsionnant: solution de dodécylbenzènesulfonate de sodium à 180 g/kg; initiateur hydrosoluble: solution aqueuse de persulfate d'ammonium à 66.5 g/L).

On a vidangé le latex du réacteur. On a filtré le latex sur un tamis à mailles distantes de 1 mm. On a introduit le latex dans un réservoir de stockage.

On a prélevé un échantillon de latex dans le réservoir de stockage et on en a mesuré la teneur en matières sèches par densimétrie: la teneur en matières sèches du latex semence PVC était de 33.6%.

On a déterminé également la distribution des particules élémentaires de polymère du latex semence par photosédimentométrie au moyen d'un appareil CPS de la société CPS Instruments Inc. La distribution des particules élémentaires de polymère du latex semence PVC était unimodale et le diamètre moyen (sommet du pic) de ces particules élémentaires valait 105 nm.

### Préparation d'un latex PVC ensemencé PVC

### Polymérisation

Dans un autoclave de 25 L équipé d'un agitateur et d'une double enveloppe, on a introduit tout d'abord 13.9 kg d'eau déminéralisée, 58 mg de sulfate de cuivre pentahydraté et 1146.6 g du latex semence PVC (à 33.6%). On a fermé l'autoclave et on a mis l'agitateur en marche. On a ensuite effectué le vide sur l'autoclave. On a ensuite introduit 8.0 kg de VC dans l'autoclave et on y a maintenu une agitation vive pour y constituer une dispersion aqueuse homogène de gouttelettes du VC.

On a porté le contenu du réacteur à 48°C. Une fois cette température atteinte (tₒ), on a introduit 34.6 mL d'une solution d'ammoniaque (à 222.5 g/L) et 4.6 g de persulfate d'ammonium (APS) (0.48‰ du VC total). Durant la polymérisation, 115.6 g d'un mélange de laurylsulfate de sodium et de dioctylsufosuccinate de sodium ont été introduits (entre tₒ + 45' et tₒ + 4h15) ainsi que 1.6 kg de VC (en 2 injections de quantité égale, l'une à tₒ + 2h et l'autre à tₒ + 3h). La polymérisation a été régulée en injectant si nécessaire la quantité adéquate de sulfite de sodium entre t₀ et la chute de pression afin de maintenir un certain écart de température entre la double enveloppe et l'autoclave (3°C).

Une fois la diminution de pression détectée, on a relevé la durée écoulée depuis tₒ et on a porté le contenu du réacteur à une température plus élevée.

### Opérations de fin

On a procédé à un traitement d'épuration en VC résiduaire puis ajouté au latex 17.3 g de carbonate de soude et 11.6 g d'hydroxyde de lithium.

On a vidangé le latex et on a assaini le réacteur.

On a recueilli le croûtage humide présent à l'intérieur du réacteur, notamment sur ses parois et sur les pâles de l'agitateur. Après pesée, le croûtage humide a été séché à l'étuve. Le croûtage sec a été pesé à son tour.

On a filtré le latex sur un tamis à mailles distantes de 1 mm. On a recueilli les grumeaux humides refusés sur ce tamis. Après pesée, les grumeaux humides ont été séchés à l'étuve. Les grumeaux secs ont été pesés à leur tour.

### Séchage du latex et récupération de la résine

Le latex a été séché par atomisation et la résine obtenue a été broyée.

### Evaluation de la stabilité thermique

On a évalué la stabilité thermique de la résine broyée (0.5 g) au moyen d'un Thermomat PVC 763 construit par la firme Metrohm.

L'échantillon de PVC chauffé à 180°C se décompose avec dégagement d'HCl qui est entraîné par un courant gazeux (7 L/h de N₂) dans une cellule de mesure où il est absorbé par de l'eau ultrapure. La concentration en HCl de cette eau est mesurée en continu par conductimétrie.

La stabilité thermique conventionnelle a été définie comme le temps requis pour que la réaction de déhydrochloration à la température de 180°C conduise à une conductimétrie de 50 µS/cm. Elle est exprimée en minutes et secondes.

### Evaluation de la taille des particules

On a déterminé également la distribution des particules élémentaires de polymère du latex par photosédimentométrie au moyen d'un appareil CPS de la société CPS Instruments Inc.

La taille des particules de polymère dans la résine après séchage et avant ou après broyage a été mesurée au moyen d'un appareil d'analyse granulométrique par diffusion de la lumière de type Mastersizer 2000 fabriqué par la firme Malvern. La taille moyenne donnée correspond à la valeur d50.

### Evaluation de la teneur en GMA dans la résine

La teneur en GMA dans la résine de PVC a été calculée à partir des résultats d'analyse élémentaire du chlore. L'analyse élémentaire du chlore a été réalisée par minéralisation d'environ 100 mg de la résine de PVC en bombe de Wurzschmitt au Na₂O₂ et éthylène glycol suivie d'une acidification par HNO₃ et un dosage potentiométrique avec AgNO₃ 0.1N. La teneur en chlore étant relative à la proportion de PVC dans la résine, il était alors aisé d'en déduire la teneur en GMA dans la résine. Celle-ci est exprimée en pourcentage.

### Evalutation de la teneur en épichlorohydrine et en GMA résiduaire

Les teneurs en épichlorohydrine et en GMA résiduaire dans le PVC ont été mesurées par la technique d'espace de tête sur un chromatographe en phase gazeuse couplé à un spectromètre de masse (GC-MS). Pour cela, 2 g de résine broyée ont été chauffés à 180°C pendant 15 minutes et l'atmosphère au-dessus de l'échantillon a été analysée par GC-MS. La teneur est exprimée en ppm par rapport au poids de la résine. Une valeur indiquée comme supérieure à 200 ppm signifie que la teneur en épichlorohydrine est très importante et bien supérieure aux valeurs ciblées par la technique d'analyse susmentionnée (saturation).

Dans cet exemple:
- la polymérisation a duré 299 minutes;
- la quantité de grumeaux et de croûtages secs (exprimée en % du VC introduit) s'élevait à 0.20;
- la distribution des particules élémentaires du latex était unimodale avec un diamètre moyen de 352 nm ;
- la taille moyenne (d50) des particules de polymère dans la résine était de 40 µm avant broyage et de 25 µm après broyage ;
- la stabilité thermique de la résine broyée était de 48 minutes ;
- l'analyse GC-MS a montré qu'il n'y avait pas d'épichlorohydrine ni de GMA résiduaire dans la résine.

### Exemple 2 (selon l'invention)

### Préparation d'un latex semence PGMA

Dans un réacteur de 3 L équipé d'un agitateur et d'une double enveloppe, on a préparé un latex semence de poly(methacrylate de glycidyle) (PGMA) par une étape de polymérisation en émulsion aqueuse effectuée à 70°C (ratio eau/methacrylate de glycidyle (GMA) = 3.5) en présence de dodécylbenzènesulfonate de sodium (3.5% /GMA) comme agent émulsionnant et de persulfate d'ammonium (0.375% /GMA) comme initiateur hydrosoluble de polymérisation.

On a vidangé le latex du réacteur. On a filtré le latex sur un tamis à mailles distantes de 500 µm. On a ensuite introduit le latex dans un réservoir de stockage. Le rendement massique de la réaction était quantitatif (>98%) et confirmé par analyse RMN ¹H avec notamment une teneur en monomère résiduaire négligeable (<1%).

On a prélevé un échantillon de latex dans le réservoir de stockage et on en a mesuré la teneur en matières sèches par thermobalance à une température de 140°C la teneur en matières sèches du latex semence PGMA était de 22.4 %.

On a déterminé également la distribution des particules élémentaires de polymère du latex semence PGMA par diffusion de la lumière au moyen d'un appareil de la société Malvern. La distribution des particules élémentaires de polymère du latex semence PGMA était unimodale; le diamètre moyen (d50) de ces particules élémentaires valait 115 nm.

### Préparation d'un latex PVC ensemencé PGMA

On a reproduit l'exemple 1R, sauf que:
- le latex semence PGMA a été utilisé au lieu du latex semence PVC, toujours à 4% par rapport à la quantité de VC totale, soit 1719.6 g (à 22.4%) ;
- la quantité d'APS introduite était de 3.7 g (0,38‰ /VC total) et a été introduite de tₒ + 45' jusqu'à la chute de pression.

Dans cet exemple,
- la polymérisation a duré 152 minutes;
- la quantité de grumeaux et de croûtages secs (exprimée en % du VC introduit) s'élevait à 0.99;
- la distribution des particules élémentaires de polymère du latex était unimodale avec un diamètre moyen de 288 nm ;
- la taille moyenne (d50) des particules de polymère dans la résine était de 38 µm avant broyage et de 24 µm après broyage ;
- la stabilité thermique de la résine broyée était de 1 heure 43 minutes 12 secondes ;
- la teneur en GMA dans la résine était de 3.8 % ;
- la teneur en épichlorohydrine dans la résine était de 2 ppm et la teneur en GMA résiduaire dans la résine également de 2 ppm.

La comparaison des résultats de l'exemple 2 avec ceux de l'exemple 1R montre une forte amélioration de la stabilité thermique tout en gardant une taille moyenne (d50) des particules de polymère dans la résine similaire. La résine obtenue à l'exemple 2 se caractérise en outre par une très faible teneur en épichlorohydrine et en GMA résiduaire.

### Exemple 3 (selon l'invention)

On a reproduit l'exemple 1R, sauf que:
- le latex semence PGMA dont la synthèse est décrite à l'exemple 2 a été utilisé au lieu du latex semence PVC, toujours à 4% par rapport à la quantité de VC totale, soit 1576.3 g (à 22.4%) ;
- la quantité de VC introduit en cours de polymérisation a été réduite à une injection de 0.8 kg à tₒ + 1h30; et
- la quantité d'APS introduite était de 1.775 g (0,20‰ /VC total) et a été introduite de tₒ + 30' jusqu'à la chute de pression.

Dans cet exemple,
- la polymérisation a duré 146 minutes;
- la quantité de grumeaux et de croûtages secs (exprimée en % du VC introduit) s'élevait à 0.13;
- la distribution des particules élémentaires de polymère du latex était unimodale avec un diamètre moyen de 285 nm ;
- la taille moyenne (d50) des particules de polymère dans la résine était de 41 µm avant broyage et de 21 µm après broyage ;
- la stabilité thermique de la résine broyée était de 2 heures 51 minutes 36 secondes ;
- la teneur en GMA de la résine était de 4.2 % ;
- la teneur en épichlorohydrine dans la résine était de 2 ppm et la teneur en GMA résiduaire dans la résine était de 4 ppm.

La comparaison des résultats des exemples 2 et 3 (selon l'invention) avec ceux de l'exemple 1R (comparatif) fait apparaître une très forte amélioration de la stabilité thermique des résines obtenues. Les résines obtenues aux exemples 2 et 3 se caractérisent par une taille moyenne (d50) des particules de polymère dans la résine similaire à celle de la résine obtenue à l'exemple 1R. Enfin, les résines obtenues aux exemples 2 et 3 se caractérisent en outre par une très faible teneur en épichlorohydrine et en GMA résiduaire.

### Exemple 4R (comparatif)

### Polymérisation

Dans un autoclave de mélange de 35 L équipé d'un agitateur et d'une double enveloppe, on a introduit tout d'abord 17.4 kg d'eau déminéralisée et 9.946 g d'un alcool polyvinylique de taux d'hydrolyse égal à 72%mol et présentant une viscosité (solution aqueuse à 4% en poids) de 5mPa.s.

On a ensuite introduit 4.351 g de peroxyde de lauroyle, 1.443 g d'hydroxyde de sodium, 0.556 g de peroxyde d'hydrogène et 3.730 g de chloroformiate d'éthyle.

On a alors introduit 124.321 g de GMA et effectué le vide sur l'autoclave. On a ensuite introduit 12.4 kg de VC dans l'autoclave et on y a maintenu une agitation vive pour y constituer une dispersion aqueuse homogène de gouttelettes du VC. On a porté le contenu du réacteur à 70°C ; le moment auquel cette température a été atteinte constituant le moment tₒ. Une fois la diminution de pression détectée (2 bar), on a relevé la durée écoulée depuis tₒ et on a ajouté 1.243 g de BHT (2,6-di (tert-butyl)hydroxytoluene) et 4.973 g d'huile de soja époxydée.

### Opérations de fin

On a refroidi le réacteur puis on a vidangé le réacteur vers un dégazeur dans lequel on a procédé à un traitement d'épuration en VC résiduaire. On a filtré le slurry obtenu sur un tamis à mailles distantes de 500 µm. On a recueilli les grumeaux humides refusés sur ce tamis. Ces grumeaux humides ont été séchés à l'étuve. Les grumeaux secs ont été pesés.

### Séchage du slurry et récupération de la résine

Le slurry a été essoré puis séché sur lit fluide et la résine obtenue a été recueillie sous forme de poudre.

### Evaluation de la stabilité thermique

On a évalué la stabilité thermique de la résine obtenue (0.5 g) au moyen d'un Thermomat PVC 763 construit par la firme Metrohm comme décrit à l'exemple 1R.

### Evalutation de la teneur en épichlorohydrine et en GMA résiduaire.

Les teneurs en épichlorohydrine et en GMA résiduaire dans la résine de PVC ont été mesurées comme décrit à l'exemple 1R.

### Evaluation de la teneur en GMA dans la résine

La teneur en GMA dans la résine de PVC a été calculée de la même manière que décrit à l'exemple 1R.

Dans cet exemple:
- la polymérisation a duré 6h55 (mais la chute de pression de 2 bar n'a pas été atteinte);
- la quantité de grumeaux secs (exprimée en ‰ du VC introduit) s'élevait à 10.5;
- la stabilité thermique de la résine était de 46 minutes et 12 secondes;
- la teneur en GMA de la résine était de 6.2 % ;
- la teneur en épichlorohydrine dans la résine était supérieure à 200 ppm et la teneur en GMA résiduaire dans la résine était de 7 ppm.

### Exemple 5R (comparatif)

On a reproduit l'exemple 4R, sauf que:
- le GMA a été introduit en cours de polymérisation entre t₀ et t₀+1h30 au lieu d'être introduit avant tₒ.

Dans cet exemple:
- la polymérisation a duré 3h52;
- la quantité de grumeaux secs (exprimée en ‰ du VC introduit) s'élevait à 9.6;
- la stabilité thermique de la résine était de 25 minutes et 48 secondes;
- la teneur en GMA de la résine était de 1.0 % ;
- la teneur en épichlorohydrine dans la résine (mesurée de la manière décrite ci-dessus) était supérieure à 200 ppm et la teneur en GMA résiduaire dans la résine était de 3 ppm.

La teneur en épichlorohydrine a été mesurée au moyen d'une autre technique d'analyse. Ainsi, la teneur en épichlorohydrine a été mesurée par GC-MS parmi les composés volatils extraits par une désorption thermique de la résine pendant 15 minutes à 180°C. La teneur exprimée en ppm par rapport au poids de la résine, a été évaluée à 130 ppm correspondant à la saturation atteinte par cette technique.

### Exemple 6R (comparatif)

On a reproduit l'exemple 4R, sauf que:
- le GMA a été introduit en cours de polymérisation entre t0+1h30 et t0+3h00 au lieu d'être introduit avant tₒ.

Dans cet exemple:
- la polymérisation a duré 2h50;
- la quantité de grumeaux secs (exprimée en ‰ du VC introduit) s'élevait à 11.4;
- la stabilité thermique de la résine était de 20 minutes 24 secondes ;
- la teneur en GMA de la résine était de 0.6 % ;
- la teneur en épichlorohydrine dans la résine était supérieure à 200 ppm et la teneur en GMA résiduaire dans la résine était de 77 ppm.

La comparaison des résultats des exemples 4R, 5R et 6R avec ceux des exemples 2 et 3 (selon l'invention) fait apparaître que le procédé selon l'invention conduit à l'obtention de résines de PVC se caractérisant par une teneur en épichlorohydrine nettement plus faible.

### Exemple 7R (comparatif)

### Préparation du PGMA

Le polymère de méthacrylate de glycidyle a été fourni par la société Specific Polymers basée à Montpellier (France). Il s'agissait d'un cotélomère du GMA avec l'acrylate de n-butyle (ratio molaire 72%:28% dans le copolymère) obtenu par cotélomérisation directe en présence de CCl₃Br comme agent de transfert.

Le produit fourni était un liquide visqueux translucide (Mₙ = 682 g/mol, M_{w} = 1049 g/mol, M_{w}/Mₙ = 1.54 mesurés par chromatographie d'exclusion stérique avec un étalonnage PMMA).

### Préparation du mélange PVC-PGMA

0.5 g de PGMA ont été dispersé dans 3 g d'acétone et ce mélange a été introduit dans 10 g de résine PVC (SOLVIN®260RF). L'ensemble a été mélangé à la main pour obtenir un cake qui a ensuité été séché sous vide à 45 °C pendant 4 heures. Le mélange obtenu a été recueilli sous forme de poudre.

### Evaluation de la stabilité thermique

On a évalué la stabilité thermique de la poudre obtenue (0.5 g) au moyen d'un Thermomat PVC 763 construit par la firme Metrohm comme décrit à l'exemple 1R.

Dans cet exemple, la stabilité thermique de la résine était de 52 minutes 48 secondes. La stabilité thermique de la résine PVC SOLVIN®260RF mesurée dans les mêmes conditions était de 18 minutes 36 secondes.

La teneur en épichlorohydrine dans le mélange a été mesurée par GC-MS et désorption thermique de la même manière et dans la même série d'analyses que la résine décrite à l'exemple 5R. Elle a été estimée comme étant 10 fois inférieure à la teneur mesurée pour la résine obtenue à l'exemple 5R, c'est-à-dire supérieure à 10 ppm.

### Exemple 8R (comparatif)

Le latex semence PGMA obtenu à l'exemple 2 a été séché sous vide à température ambiante pour obtenir une résine PGMA qui a ensuité été mélangée, à température ambiante, à du di-isononylphtalate (DINP), à raison de 85 parts en poids de DINP pour 4 parts en poids de la résine PGMA.

Il n'a néanmoins pas été possible de solubiliser correctement la résine de PGMA dans le plastifiant. La résine est restée sous forme de paillettes/grumeaux et il n'a pas été posible d'obtenir une pâte homogène.

### Exemple 9 (selon l'invention)

### Préparation d'un latex PVC ensemencé PGMA

### Polymérisation

Dans un autoclave de 15 L équipé d'un agitateur et d'une double enveloppe, on a introduit tout d'abord 5541 g d'eau déminéralisée, 26 mg de sulfate de cuivre pentahydraté et 726.7 g d'un latex semence PGMA préparé comme décrit à l'exemple 2 (4% /VC total) et dont la teneur en matières sèches était de 23.5%. On a fermé l'autoclave et on a mis l'agitateur en marche. On a ensuite effectué le vide sur l'autoclave. On a ensuite introduit 4269 g de VC dans l'autoclave et on y a maintenu une agitation vive pour y constituer une dispersion aqueuse homogène de gouttelettes du VC.

On a porté le contenu du réacteur à 48°C. Une fois cette température atteinte (tₒ), on a introduit 15.5 mL d'une solution d'ammoniaque (à 220 g/L) et 12 mL d'une solution aqueuse de persulfate d'ammonium (APS) à 10 g/L (0.25 ‰/VC total). Durant la polymérisation, 51.2 g d'un mélange de laurylsulfate de sodium et de dioctylsufosuccinate de sodium ont été introduits (entre tₒ + 45' et tₒ + 4h15) ainsi que 427 g de VC (à tₒ + 2h). La polymérisation a été régulée en injectant si nécessaire la quantité adéquate de sulfite de sodium entre t₀ et la chute de pression afin de maintenir un certain écart de température entre la double enveloppe et l'autoclave (2°C).

Une fois la diminution de pression détectée, on a relevé la durée écoulée depuis tₒ et on a porté le contenu du réacteur à une température plus élevée.

### Opérations de fin

On a procédé à un traitement d'épuration en VC résiduaire puis ajouté au latex 7.7 g de carbonate de soude et 5.1 g d'hydroxyde de lithium.

On a vidangé le latex et on a assaini le réacteur.

On a recueilli le croûtage humide présent à l'intérieur du réacteur, notamment sur ses parois et sur les pâles de l'agitateur. Après pesée, le croûtage humide a été séché à l'étuve. Le croûtage sec a été pesé à son tour.

On a filtré le latex sur un tamis à mailles distantes de 1 mm. On a recueilli les grumeaux humides refusés sur ce tamis. Après pesée, les grumeaux humides ont été séchés à l'étuve. Les grumeaux secs ont été pesés à leur tour.

### Séchage du latex et récupération de la résine

Le latex a été séché par atomisation et la résine obtenue a été broyée.

### Evaluation de la stabilité thermique

On a évalué la stabilité thermique de la pâte contrôle (0.5 g de pâte constituée de 100 pcr de résine PVC et de 85 pcr de diisononylphtalate) au moyen d'un Thermomat PVC 763 construit par la firme Metrohm.

L'échantillon de PVC chauffé à 180°C se décompose avec dégagement d'HCl qui est entraîné par un courant gazeux (7 L/h de N₂) dans une cellule de mesure où il est absorbé par de l'eau ultrapure. La concentration en HCl de cette eau est mesurée en continu par conductimétrie.

La stabilité thermique conventionnelle a été définie comme le temps requis pour que la réaction de déhydrochloration à la température de 180°C conduise à une conductimétrie de 50 µS/cm. Elle est exprimée en minutes et secondes.

Dans cet exemple:
- la polymérisation a duré 127 minutes;
- la quantité de grumeaux et de croûtages secs (exprimée en % du VC introduit) s'élevait à 0.25;
- la distribution des particules élémentaires du latex était unimodale avec un diamètre moyen de 265 nm ;
- la taille moyenne (d50) des particules de polymère dans la résine était de 37 µm avant broyage et de 26 µm après broyage ;
- la stabilité thermique de la pâte contrôle était de 227.4 minutes ;

### Exemple 10 (selon l'invention)

On a reproduit l'exemple 9, sauf que:
- la quantité de latex semence au PGMA (6% / VC total) était de 1090 g au lieu de 726 g ;
- la quantité de VC introduit en cours de polymérisation a été augmentée avec une seconde injection de 427 g à tₒ + 3h;
- la quantité d'APS introduite était de 16 mL (0.31 ‰ /VC total) et a été introduite en plusieurs fois jusqu'à la chute de pression.

Dans cet exemple,
- la polymérisation a duré 268 minutes;
- la quantité de grumeaux et de croûtages secs (exprimée en % du VC introduit) s'élevait à 0.22;
- la distribution des particules élémentaires de polymère du latex était unimodale avec un diamètre moyen de 238 nm ;
- la taille moyenne (d50) des particules de polymère dans la résine était de 45 µm avant broyage et de 22 µm après broyage ;
- la stabilité thermique de la pâte contrôle était de 239.4 minutes;

### Exemple 11 (selon l'invention)

On a reproduit l'exemple 9, sauf que:
- la quantité de latex semence au PGMA (2% /VC total) était de 363 g au lieu de 726 g ;
- la quantité de VC introduit en cours de polymérisation a été augmentée avec une seconde injection de 427 g à tₒ + 3h;
- la quantité d'APS introduite était de 7.2 mL (0.14 ‰ /VC total) et a été introduite à tₒ.

Dans cet exemple,
- la polymérisation a duré 162 minutes;
- la quantité de grumeaux et de croûtages secs (exprimée en % du VC introduit) s'élevait à 0.10;
- la distribution des particules élémentaires de polymère du latex était unimodale avec un diamètre moyen de 333 nm ;
- la taille moyenne (d50) des particules de polymère dans la résine était de 40 µm avant broyage et de 24 µm après broyage ;
- la stabilité thermique de la pâte contrôle était de 219.6 minutes;

Les exemples 9-11 illustrent bien que la stabilité thermique atteinte dépend de la proportion de semence PGMA introduite dans le milieu, puisque cette stabilité thermique augmente avec le pourcentage de PGMA dans la résine.

## Revendications

1. Procédé pour la préparation d'un polymère du chlorure de vinyle comprenant
• une étape de polymérisation du chlorure de vinyle, et éventuellement d'un ou plusieurs comonomères de celui-ci, effectuée en dispersion aqueuse en présence d'au moins un initiateur de polymérisation, d'au moins un agent émulsionnant et d'un latex semence d'un polymère contenant des fonctions époxydes, conduisant à l'obtention d'un latex d'un polymère du chlorure de vinyle, lors de laquelle le poids du latex semence rapporté au poids total du chlorure de vinyle et de son ou ses éventuels comonomères vaut au moins 1% et au plus 10%, le poids du latex semence étant le poids des particules solides du latex semence, en d'autres termes le poids du polymère contenant des fonctions époxydes;
• une étape de séparation du polymère du chlorure de vinyle du latex le contenant conduisant à l'obtention d'un polymère du chlorure de vinyle.

2. Procédé selon la revendication 1, **caractérisé en ce que** le latex semence est préparé par polymérisation en dispersion aqueuse d'un monomère portant des fonctions époxydes et éventuellement d'un comonomère de celui-ci en présence d'au moins un initiateur de polymérisation et d'au moins un agent émulsionnant.

3. Procédé selon la revendication 2, **caractérisé en ce que** le latex semence est préparé par polymérisation en émulsion aqueuse.

4. Procédé selon l'une quelconque des revendications 1 à 3, **caractérisé en ce que** l'étape de polymérisation est effectuée en présence de 2 à 6 % en poids, par rapport au poids total du chlorure de vinyle et de son ou ses éventuels comonomères, d'un latex semence d'un polymère contenant des fonctions époxydes.

5. Procédé selon l'une quelconque des revendications 1 à 4, **caractérisé en ce que** le latex semence est un latex d'un polymère du méthacrylate de glycidyle.

6. Procédé selon la revendication 5, **caractérisé en ce que** le polymère du méthacrylate de glycidyle est un homopolymère.

7. Procédé selon l'une quelconque des revendications 1 à 6, **caractérisé en ce que** l'étape de polymérisation est effectuée en émulsion aqueuse.

8. Procédé selon l'une quelconque des revendications 1 à 7, **caractérisé en ce que** l'étape de séparation est réalisé par filtration suivie d'un séchage par atomisation.

9. Procédé selon l'une quelconque des revendications 1 à 8, **caractérisé en ce que** le polymère du chlorure de vinyle est un homopolymère du chlorure de vinyle.

10. Polymère du chlorure de vinyle obtenu par le procédé selon la revendication 1 et **se caractérisant par** une teneur en épichlorohydrine inférieure ou égale à 10 ppm.

11. Polymère du chlorure de vinyle selon la revendication 10 où le polymère contenant des fonctions époxydes est un polymère du méthacrylate de glycidyle.

12. Utilisation du polymère du chlorure de vinyle selon la revendication 10 ou 11 ou obtenu par le procédé selon l'une quelconque des revendications 1 à 9 pour la préparation de films et de revêtements.

13. Article ou partie d'article fabriqué au départ du polymère du chorure de vinyle selon la revendication 10 ou 11 ou obtenu par le procédé selon l'une quelconque des revendications 1 à 9.

## Patentansprüche

1. Verfahren zur Herstellung eines Polymers von Vinylchlorid, umfassend:
• einen Schritt der Polymerisation des Vinylchlorids und gegebenenfalls eines oder mehrerer Comonomere desselben, die in wässriger Dispersion in Gegenwart wenigstens eines Polymerisationsstarters, wenigstens eines Emulgators und eines Keimlatex eines Polymers, das Epoxyfunktionen enthält, durchgeführt wird und zur Gewinnung eines Latex eines Polymers von Vinylchlorid führt, bei der das Gewicht des Keimlatex in Bezug auf das Gesamtgewicht des Vinylchlorids und seines oder seiner optionalen Comonomere wenigstens 1% und höchstens 10% beträgt, wobei es sich bei dem Gewicht des Keimlatex um das Gewicht der festen Teilchen des Keimlatex, mit anderen Worten das Gewicht des Polymers, das Epoxyfunktionen enthält, handelt;
• einen Schritt der Abtrennung des Polymers des Vinylchlorids von dem dieses enthaltenden Latex, was zur Gewinnung eines Polymers von Vinylchlorid führt.

2. Verfahren gemäß Anspruch 1, **dadurch gekennzeichnet, dass** der Keimlatex durch Polymerisation eines Monomers, das Epoxyfunktionen trägt, und gegebenenfalls eines Comonomers desselben in wässriger Dispersion in Gegenwart wenigstens eines Polymerisationsstarters und wenigstens eines Emulgators hergestellt wird.

3. Verfahren gemäß Anspruch 2, **dadurch gekennzeichnet, dass** der Keimlatex durch Polymerisation in wässriger Emulsion hergestellt wird.

4. Verfahren gemäß einem der Ansprüche 1 bis 3, **dadurch gekennzeichnet, dass** der Schritt der Polymerisation in Gegenwart von 2 bis 6 Gew.-%, bezogen auf das Gesamtgewicht des Vinylchlorids und seines oder seiner optionalen Comonomere, eines Keimlatex eines Polymers, das Epoxyfunktionen enthält, durchgeführt wird.

5. Verfahren gemäß einem der Ansprüche 1 bis 4, **dadurch gekennzeichnet, dass** der Keimlatex ein Latex eines Polymers von Glycidylmethacrylat ist.

6. Verfahren gemäß Anspruch 5, **dadurch gekennzeichnet, dass** das Polymer des Glycidylmethacrylats ein Homopolymer ist.

7. Verfahren gemäß einem der Ansprüche 1 bis 6, **dadurch gekennzeichnet, dass** der Schritt der Polymerisation in wässriger Emulsion durchgeführt wird.

8. Verfahren gemäß einem der Ansprüche 1 bis 7, **dadurch gekennzeichnet, dass** der Schritt der Abtrennung durch Filtration und anschließende Sprühtrocknung durchgeführt wird.

9. Verfahren gemäß einem der Ansprüche 1 bis 8, **dadurch gekennzeichnet, dass** das Polymer von Vinylchlorid ein Homopolymer von Vinylchlorid ist.

10. Polymer von Vinylchlorid, erhalten nach dem Verfahren gemäß Anspruch 1 und **gekennzeichnet durch** einen Gehalt an Epichlorhydrin von kleiner oder gleich 10 ppm.

11. Polymer von Vinylchlorid gemäß Anspruch 10, wobei das Polymer, das Epoxyfunktionen enthält, ein Polymer von Glycidylmethacrylat ist.

12. Verwendung des Polymers von Vinylchlorid gemäß Anspruch 10 oder 11, oder das nach dem Verfahren gemäß einem der Ansprüche 1 bis 9 erhalten wurde, für die Herstellung von Filmen und Beschichtungen.

13. Artikel oder Teil eines Artikels, hergestellt ausgehend von dem Polymer von Vinylchlorid gemäß Anspruch 10 oder 11, oder das nach dem Verfahren gemäß einem der Ansprüche 1 bis 9 erhalten wurde.

## Claims

1. Process for the preparation of a vinyl chloride polymer comprising:
• a stage of polymerization of vinyl chloride, and optionally of one or more comonomers of the latter, carried out in aqueous dispersion in the presence of at least one polymerization initiator, of at least one emulsifying agent and of a seed latex of a polymer containing epoxide functional groups, resulting in a latex of a vinyl chloride polymer being obtained, during which the weight of the seed latex, with respect to the total weight of the vinyl chloride and of its optional comonomer(s) has a value of at least 1% and at most 10%, the weight of the seed latex being the weight of the solid particles of the seed latex, in other words the weight of the polymer containing epoxide functional groups;
• a stage of separation of the vinyl chloride polymer from the latex containing it, resulting in a vinyl chloride polymer being obtained.

2. Process according to Claim 1, **characterized in that** the seed latex is prepared by aqueous dispersion polymerization of a monomer carrying epoxide functional groups and optionally of a comonomer of the latter, in the presence of at least one polymerization initiator and of at least one emulsifying agent.

3. Process according to Claim 2, **characterized in that** the seed latex is prepared by aqueous emulsion polymerization.

4. Process according to any one of Claims 1 to 3, **characterized in that** the polymerization stage is carried out in the presence of from 2% to 6% by weight, with respect to the total weight of the vinyl chloride and of its optional comonomer(s), of a seed latex of a polymer containing epoxide functional groups.

5. Process according to any one of Claims 1 to 4, **characterized in that** the seed latex is a latex of a glycidyl methacrylate polymer.

6. Process according to Claim 5, **characterized in that** the glycidyl methacrylate polymer is a homopolymer.

7. Process according to any one of Claims 1 to 6, **characterized in that** the polymerization stage is carried out in aqueous emulsion.

8. Process according to any one of Claims 1 to 7, **characterized in that** the separation stage is carried out by filtration, followed by drying by atomization.

9. Process according to any one of Claims 1 to 8, **characterized in that** the vinyl chloride polymer is a vinyl chloride homopolymer.

10. Vinyl chloride polymer obtained by the process according to Claim 1 and being **characterized by** an epichlorohydrin content of less than or equal to 10 ppm.

11. Vinyl chloride polymer according to Claim 10, where the polymer containing epoxide functional groups is a glycidyl methacrylate polymer.

12. Use of the vinyl chloride polymer according to Claim 10 or 11 or obtained by the process according to any one of Claims 1 to 9 in the preparation of films and coatings.

13. Article or article part manufactured from the vinyl chloride polymer according to Claim 10 or 11 or obtained by the process according to any one of Claims 1 to 9.
